(19) **Europäisches Patentamt European Patent Office Office européen des brevets**

(11) **EP 4 589 481 A1**

(12) # EUROPEAN PATENT APPLICATION

(43) Date of publication:
**23.07.2025  Bulletin 2025/30**

(21) Application number: **24305104.2**

(22) Date of filing: **16.01.2024**

(51) International Patent Classification (IPC):
*G06N 3/09* (2023.01)        *G06N 3/04* (2023.01)

(52) Cooperative Patent Classification (CPC):
**G06N 3/09;** G06N 3/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **BULL SAS**
  **78340 Les Clayes-Sous-Bois (FR)**
- **Institut National Polytechnique de Toulouse**
  **31029 Toulouse Cedex 4 (FR)**
- **UNIVERSITE TOULOUSE III - PAUL SABATIER**
  **31062 Toulouse Cedex 9 (FR)**
- **Centre National de la Recherche Scientifique**
  **75016 Paris (FR)**
- **SORBONNE UNIVERSITE**
  **75006 Paris (FR)**

(72) Inventors:
- **BEUZEVILLE, Théo**
  **31400 Toulouse (FR)**
- **WINCKLER, Nicolas**
  **38190 Villard Bonnot (FR)**
- **BUTTARI, Alfredo**
  **31500 Toulouse (FR)**
- **GRATTON, Serge**
  **31400 Toulouse (FR)**
- **MARY, Theo**
  **69260 Charbonnières-les-Bains (FR)**

(74) Representative: **IPAZ**
**Bâtiment Platon**
**Parc Les Algorithmes**
**91190 Saint-Aubin (FR)**

(54) **METHOD FOR TRAINING AN ARTIFICIAL INTELLIGENCE MODEL AND ASSOCIATED COMPUTER PROGRAM**

(57)    The invention concerns a computer-implemented method (20) for training an artificial intelligence model based on a training dataset, the method (20) including iteratively performing a training loop (22) for training the artificial intelligence model based on a current subset of the training dataset and on a current condition number of the artificial intelligence model, to update the artificial intelligence model.

**Figure 2**

**Description**

**Field of the invention**

The present invention relates to a computer-implemented method for training an artificial intelligence model based on a training dataset.

The invention further relates to a computer program.

The invention applies to the field of computer science, and more precisely to the field of artificial intelligence.

**Background**

Artificial intelligence models (hereinafter, "AI models"), such as deep neural networks, have become increasingly popular and successful in several tasks, as their efficiency in solving complex problems has kept increasing up to a level where AI models are now used to perform safety-critical tasks such as autonomous driving and medicine.

Such AI models may require training (also referred to as "supervised machine learning"). During such training, a training dataset including examples is provided, each example comprising an input associated with a corresponding expected output. Then, the AI model is provided with the inputs of the dataset, and, for each input, a difference between the corresponding expected output and the output provided by the AI model is monitored, generally through a loss function. Furthermore, the parameters of the AI model are modified based on said difference, so as to minimize the latter.

An issue in supervised machine learning is over-fitting. Over-fitting is defined as the fact that an AI model does not generalize well from the training data to unseen data. For instance, over-fitting may occur when the AI model is trained for too long, thereby providing predictions that fit perfectly the training dataset, while being unable to capture information or to generalize on new data.

As a result, an over-fitted artificial intelligence model may prove to be sensitive to perturbations, such as adversarial attacks. Indeed, such adversarial attacks usually rely on small modifications in data that are known to the trained artificial intelligence model to lead to a specific output of the AI model that dramatically differs from the expected output associated with said known data. Such adversarial attacks may be particularly prejudicial, for instance in the field of classification.

Early stopping has been considered as a way to prevent over-fitting.

By "early stopping", it is meant, in the context of the present invention, stopping the training of the AI model at the early stopping point, i.e., the point at which the accuracy on a validation set stops increasing.

Indeed, it has been shown that if the AI model continues learning after the early stopping point, the validation error will increase while the training error will continue decreasing, which is typical of over-fitting.

Practically, to find out the point to stop learning, the obvious way is to keep track of accuracy on the test data as the AI model is trained.

However, such method is not fully satisfactory.

Indeed, early stopping generally requires that performances of the AI model being trained are regularly assessed based on the validation dataset in order to detect the point at which the accuracy on the validation set stops increasing, which may be cumbersome.

Moreover, early stopping is often associated with the drawback of stopping the training too early. Consequently, potential optimal points for the training of the AI model are missed.

A purpose of the present invention is to overcome at least one of these drawbacks.

Another purpose of the invention is to provide a method for training an artificial intelligence model that, based on a given training dataset, prevents over-fitting while being simple to implement.

Another purpose of the invention is to provide a training method that, when performed, provides a robust artificial intelligence model.

**Summary of the invention**

To this end, the present invention is a training method of the aforementioned type, including iteratively performing a training loop for training the artificial intelligence model based on a current subset of the training dataset and on a current condition number of the artificial intelligence model, to update the artificial intelligence model.

Indeed, the inventors have discovered that the condition number of an artificial intelligence model is directly linked with over-fitting during training. More precisely, the inventors have discovered that an increasing condition number corresponds to over-fitting.

Consequently, training the artificial intelligence model based on the condition number allows to prevent over-fitting and to obtain more robust artificial intelligence models compared to known training techniques.

According to other advantageous aspects of the invention, the method includes one or several of the following features, taken alone or in any technically possible combination:

the training loop comprises a decision step for determining, based on the current condition number of the artificial intelligence model, whether an over-fitting condition is reached, the training loop further comprising, based on a result of the determination, performing:

- an adjustment step for adjusting parameters of the artificial intelligence model based on the current subset of the training dataset if the over-fitting condition is not reached; or
- a stopping step for stopping the training of the artificial intelligence model, if the over-fitting condition is reached;

the decision step includes comparing the current condition number to the condition number associated with at least one previous iteration of the training loop, the over-fitting condition being reached if an increase in the condition number is detected;

the stopping step further includes outputting, as a trained model, an instance of the artificial intelligence model associated with the lowest condition number;

for each iteration of the training loop, computing the condition number includes:

- computing, for each variable X associated with the current subset of the training dataset, a corresponding condition number as:

$$\kappa_f(X) = \frac{\|\mathcal{J}_f(X)\| \, \|\vec{X}\|}{\|y\|}$$

where:

- $\kappa_f(X)$ is the condition number corresponding to variable X;
- $\mathcal{J}_f(X)$ is a Jacobian matrix of the artificial intelligence model with respect to variable X;
- y is an output of the artificial intelligence model corresponding to variable X;
- X is a variable including at least an input x of the current subset of the training dataset and, preferably, at least part of the parameters of the artificial intelligence model;
- $\vec{X}$ is a vectorized version of variable X; and

- determining the condition number, for the current subset, based on the condition number computed for each variable X associated with the current subset;

the training loop comprises an optimization step for adjusting parameters of the artificial intelligence model, based on the current subset of the training dataset, to minimize a loss function that is an increasing function of the condition number of the artificial intelligence model;

the loss function is equal to a sum of:

- a first term that is an increasing function of a difference between, on the one hand, an output of the artificial intelligence model to a corresponding received input, and, on the other hand, an expected output associated with said received input;
- a second term that is an increasing function of the condition number.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

**Brief description of the drawings**

Other advantages and characteristics will become apparent on examination of the detailed description of an embodiment which is in no way limitative, and the attached figures, where:

Figure 1 is a schematic representation of a computer configured to perform a training method according to the invention;

Figure 2 is a flowchart of a first embodiment of the training method according to the invention;

Figure 3 is a graph showing the evolution of the condition number of an artificial intelligence model as a function of a number of iterations of a training loop of the training method of figure 2; and

Figure 4 is a flowchart of a second embodiment of the training method according to the invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

## Detailed description

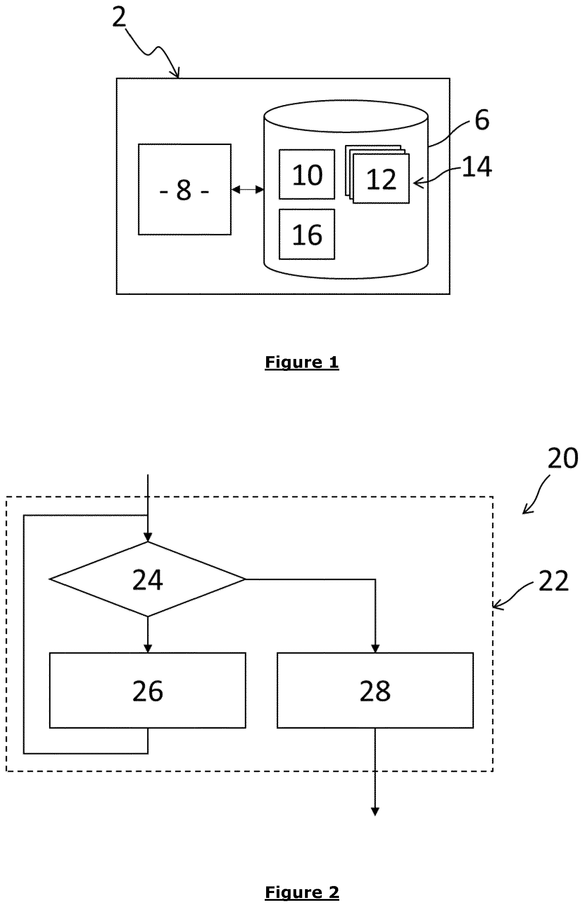

A computer 2 configured to perform a training method according to the invention, for training an artificial intelligence model, is shown on figure 1.

The computer 2 includes a memory 6 and a processing unit 8.

The memory 6 is configured to store a training dataset 10.

As known to the person skilled in the art, the training dataset 10 preferably includes at least one example, each example comprising an input associated with at least one corresponding expected output. Such expected output may also be referred to as "label".

For instance, in the case where the training dataset 10 is designed for the training of a classification model, the training dataset 10 comprises a plurality of images. In this case, for each image, each corresponding label is representative of a class to which belongs a respective object depicted (i.e., shown) in said image.

The memory 6 is also configured to store the aforementioned artificial intelligence model 12 (hereinafter, "model").

Preferably, the artificial intelligence model 12 is a classification model, such as a classification neural network. Indeed, the inventors have found that the training method according to the invention is particularly suitable for training a classification model. In this case, the artificial intelligence model 12 is configured to provide, for each image provided as input, a class for each object detected in said input image.

Preferably, the memory 6 is also configured to store, for at least one iteration of a training loop (described below) of the training method, a respective instance of the model 12 obtained after said iteration of the training loop. On figure 1, the successive instances of the model 12 are shown as a pile 14.

Preferably, the memory 6 is further configured to store a trained model 16, which corresponds to the instance of the model 12 that is available once the training method (having reference 20 on figure 2) is performed.

As mentioned previously, in order to train the model 12, the computer 2 is configured to perform the aforementioned training method 20 (figure 2).

The training method 20 includes a training loop 22 for iteratively training the model 12.

More precisely, each iteration of the training loop 22 comprises training the model 12 based on a corresponding current subset of the training dataset 10, as well as based on a current condition number of the model 12. Consequently, performing each training loop 22 results in an updated model 12.

By "condition number" (or "conditioning") of a function (such as an artificial intelligence model), it is meant, in the context of the invention, a quantity that is representative of the sensitivity of the function to perturbations in the input data. More precisely, the condition number is representative of the relative change in the output of the function for a given relative change in the input.

Consequently, a low condition number is indicative of a well-posed problem. Therefore, in the context of enhancing robustness and preventing over-fitting, a low condition number is a desired property in a function (and, more specifically, in a model).

Formally, the condition number of a given function f (such as an artificial intelligence model, for instance) for a given input x is defined as:

$$\lim_{\varepsilon \to 0^+} \sup_{\|\delta x\| \le \varepsilon} \left[ \frac{\|f(x+\delta x)-f(x)\|}{\|f(x)\|} \bigg/ \frac{\|\delta x\|}{\|x\|} \right]$$

where:

- "lim" is the limit operator;
- "sup" is the supremum operator;
- $\varepsilon$ is a strictly positive real number;
- $\delta x$ is a perturbation in the input; and
- $\|.\|$ is the Euclidian norm.

Preferably, the processing unit 8 is configured to perform each iteration of the training loop 22 based on a respective subset of the training dataset 10. In other words, the subset of the training dataset 10 which is used for training the model 12 preferably differs from one iteration of the training loop 22 to the other.

As can be seen on figure 2, the training loop 22 comprises a decision step 24 for determining whether an over-fitting condition is reached. The training loop 22 further comprises an adjustment step 26 and a stopping step 28.

More precisely, the processing unit 8 is configured to determine, during the decision step 24, and based on the current condition number of the model 12, whether an over-fitting condition is reached.

In this case, the processing unit 8 is configured to first compute, during the decision step 24, a condition number $\kappa_f(X)$ of the model 12, based at least on the current subset of the training database 10.

More precisely, the processing unit 8 is configured to compute the condition number $\kappa_f(X)$ as:

$$\kappa_f(X) = \frac{\|\mathcal{J}_f(X)\| \, \|\vec{X}\|}{\|y\|}$$

where:

- $\mathcal{J}_f(X)$ is a Jacobian matrix of the artificial intelligence model with respect to a variable X;
- the variable X includes, at least, an input x of the current subset of the training database 10, and, preferably, at least part of parameters A of the artificial intelligence model 12;
- y is an output of the artificial intelligence model corresponding to X;
- $\vec{X}$ is a vectorized version of variable X.

For instance, the processing unit 8 may be configured to compute the Jacobian matrix of the model 12 with respect to variable X using a custom implementation using auto-differentiation. As known to the person skilled in the art, auto-differentiation enables to compute partial derivatives of a function (such as an artificial intelligence model) with respect to its input and/or its parameters.

The processing unit 8 is also configured to compute the condition number associated with the current subset of the dataset 10 based on the condition number $\kappa_f(X)$ computed for each input x of said subset.

For instance, the processing unit 8 is configured to compute the condition number for the current subset of the dataset 10 (i.e., for the current instance of the model 12) as an average of the condition numbers $\kappa_f(X)$ computed for the inputs x of said subset.

For instance, in the case where the model 12 is a p-layer neural network, hereinafter noted "f", and assuming the neural network f is differentiable at input x, the processing unit 8 is configured to compute the condition number, for said variable X (including input x and parameters A), based on the corresponding output y of the neural network, formally defined as:

$$y = f_p\left(A_p f_{p-1}\left(A_{p-1}...A_2 f_1\left(A_1 x\right)...\right)\right)$$

where:

- $f_i$ is the activation function of the $i^{th}$ layer of the neural network f; and
- $A_i$ are the parameters of the activation function $f_i$.

In this case, the vectorized variable $\vec{X}$ includes the input x (e.g., an image) and the parameters $A_i$ of the successive layer of the neural network f, that is:

$$\vec{X} = \begin{bmatrix} \text{vec}(x) \\ \text{vec}(A_1) \\ \vdots \\ \text{vec}(A_p) \end{bmatrix}$$

Furthermore, in this case, the processing unit is 8 is configured to first compute the Jacobian matrix of the neural network f with respect to input x and parameters $A_1$, ..., $A_p$, as:

$$\mathcal{J}_f(X) = \left[ J_f^0(X),\ y_0^T \otimes J_f^1(X),\ ...,\ y_{p-1}^T \otimes J_f^p(X) \right]$$

where:

- $y^T$ is the transpose of y;
- $y_i$ is the output of the $i^{th}$ layer of the neural network f;
- $y_0$ is the input x;
- $\otimes$ is a tensor product;
- $J_f^0$ is the Jacobian matrix of the neural network f with respect to input x; and
- $J_f^i$ is the Jacobian matrix of the neural network f with respect to the parameters of the $i^{th}$ layer, computed as:

$$J_f^i(X) = f_p'\left(A_p y_{p-1}\right) A_p f_{p-1}'\left(A_{p-1} y_{p-2}\right)...A_{i+1} f_i'(A_i y_{i-1})$$

In other words, the first term of matrix $\mathcal{J}_f$ is the Jacobian matrix of the model with respect to input x, the second term is the Jacobian matrix with respect to parameters $A_1$ of the first layer of the model, and so on.

Furthermore, in order to reduce computation cost, the vectorized variable $\vec{X}$, as an approximation, may not include the parameters $A_i$ of at least one layer i. In this case, the Jacobian matrix $\mathcal{J}_f(X)$ of the neural network f does not include the term $y_{i-1}^T \otimes J_f^i(X)$ corresponding to each layer i having corresponding parameters $A_i$ not included in the vectorized variable $\vec{X}$.

Alternatively, to reduce computation cost, the vectorized variable $\vec{X}$ may, as an approximation, only include the input x. In this case, the Jacobian $\mathcal{J}_f$ matrix $_f(X)$ of the neural network f is equal to the Jacobian matrix $J_f^0$ of the neural network f with respect to input x.

Preferably, the processing unit 8 is also configured to compare, during the decision step 24, the current condition number corresponding to the current instance of the model 12 (*i.e.*, the condition number corresponding to the current iteration of the training loop 22) to the condition number associated with at least one previous iteration of the training loop 22.

In this case, the processing unit 8 is configured to determine that the over-fitting condition is reached if an increase in the condition number is detected.

Conversely, if the over-fitting condition is not reached, the processing unit 8 is configured to adjust parameters of the model 12 based on the current subset of the training dataset 10, during the adjustment step 26.

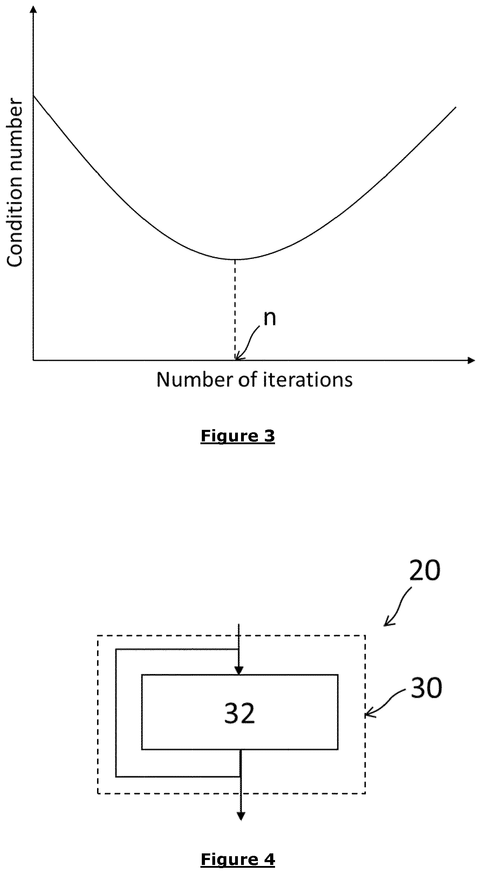

For instance, in the example of figure 3, the over-fitting condition is reached for iteration n+1 of the training loop 22. Indeed, in this case, the minimum value of the condition number is reached at iteration n, as can be seen on the figure.

For example, to perform such adjustment, the processing unit 8 is configured to modify said parameters so that a difference between, on the one hand, outputs of the model 12 computed based on the inputs of the current subset, and, on the other, the corresponding expected outputs, reaches a minimum.

Preferably, the updated model 12, which is the model 12 obtained once the adjustment step 26 is performed, is stored in the memory 6.

Furthermore, said updated model 12 is the model that is considered during the decision step 24 of the next iteration of the training loop 22.

On the other hand, if the over-fitting condition is reached, the processing unit 8 is configured to stop the training of the model 12, during the stopping step 28.

Preferably, in this case, the processing unit 8 is also configured to output, during the stopping step 28, as the trained model 16, the instance of the model 12 which is associated with the lowest condition number.

Preferably, the trained model 16 is stored in the memory 6.

A second embodiment of the training method 20 is shown on figure 4.

The training method 20 of figure 4 differs from the training method 20 of figure 2 in that the training loop, referenced 30 comprises an optimization step 32 for adjusting parameters of the artificial intelligence model, based on the current subset of the training dataset 10, to minimize a loss function.

In this case, the updated model 12 obtained once the optimization step 32 is performed is the model that is considered during the optimization step 32 of the next iteration of the training loop 30.

Advantageously, the loss function is an increasing function of the condition number of the model 12.

This feature is advantageous, as it allows penalizing models that have a higher condition number, thereby leading to trained models that are robust.

Preferably, the loss function is equal to a sum of:

- a first term that is an increasing function of a difference between, on the one hand, an output of the model 12 to a corresponding received input (*i.e.*, the inputs of the current subset of the training dataset 10), and, on the other hand, an expected output associated with said received input;
- a second term that is an increasing function of the condition number.

For instance, the loss function can be written as:

$$L(A) + \alpha\kappa_f(X)$$

where:

- $L(A)$ is the aforementioned first term;
- $\alpha\kappa(X)$ is the aforementioned second term;
- $\alpha$ is a predetermined positive value;
- $\kappa_f$ is the condition number;
- $A$ represents the parameters of the artificial intelligence model 12; and
- $X$ is the aforementioned variable including at least input x.

In this case, the condition number $\kappa_f$ may be computed using the technique described above in relation to the method of figure 2.

Naturally, both embodiments of the training method can be combined. For instance, during the training loop 22 of figure 2, performing the adjustment step 26 may include adjusting parameters of the model 12, based on the current subset of the training dataset 10, to minimize a loss function that depends on the condition number, as described in relation to the optimization step 32 of the training loop 30 of figure 4.

**Operation**

During an initial step, a training dataset 10 is stored in the memory 6 of the computer 2, along with the artificial intelligence model 12 to train.

Then, the processing unit 8 performs successive iterations of the training loop 22 for iteratively training the model 12.

More precisely, during each iteration of the training loop 22, the processing unit 8 trains the model 12 based on a corresponding current subset of the training dataset 10, as well as based on a current condition number of the model 12, thereby resulting in an updated model 12.

More precisely, according to the embodiment of figure 2, during the decision step 24 of the training loop 22, the processing unit 8 computes the current condition number of the model 12 and determines whether an over-fitting condition is reached, based on the computed current condition number.

If the over-fitting condition is not reached, then, during the adjustment step 26, the processing unit 8 adjusts parameters of the model 12 based on the current subset of the training dataset 10.

On the other hand, if the over-fitting condition is reached, then, during the stopping step 28, the processing unit 8 stops the training of the model 12. In this case, the processing unit 8 preferably outputs, as the trained model 16, the instance of the model 12 associated with the lowest condition number.

Alternatively, according to the embodiment of figure 4, during the optimization step 32 of each iteration of the training loop 30, the processing unit 8 adjusts parameters of the artificial intelligence model 12, based on the current subset of the training dataset 10, to minimize a loss function that depends on the condition number of the artificial intelligence model 12.

Of course, the invention is not limited to the examples detailed above.

**Claims**

1. **A** computer-implemented method (20) for training an artificial intelligence model (12) based on a training dataset (10), the method (20) including iteratively performing a training loop (22; 30) for training the artificial intelligence model (12) based on a current subset of the training dataset (10) and on a current condition number of the artificial intelligence model (12), to update the artificial intelligence model (12).

2. The method (20) according to claim 1, wherein the training loop (22) comprises a decision step (24) for determining, based on the current condition number of the artificial intelligence model (12), whether an over-fitting condition is reached,
   the training loop (22) further comprising, based on a result of the determination, performing:

   - an adjustment step (26) for adjusting parameters of the artificial intelligence model based on the current subset of the training dataset if the over-fitting condition is not reached; or
   - a stopping step (28) for stopping the training of the artificial intelligence model (12), if the over-fitting condition is reached.

3. The method (20) according to claim 2, wherein the decision step (24) includes comparing the current condition number to the condition number associated with at least one previous iteration of the training loop (22),
   the over-fitting condition being reached if an increase in the condition number is detected.

4. The method according to claim 2 or 3, wherein the stopping step (28) further includes outputting, as a trained model (16), an instance of the artificial intelligence model (12) associated with the lowest condition number.

5. The method (20) according to any one of claims 1 to 4, wherein, for each iteration of the training loop (22), computing the condition number includes:

   - computing, for each variable X associated with the current subset of the training dataset (10), a corresponding condition number as:

$$\kappa_f(X) = \frac{\|\mathcal{J}_f(X)\| \, \|\vec{X}\|}{\|y\|}$$

   where:

   • $\kappa_f(X)$ is the condition number corresponding to variable X;

   • $\mathcal{J}_f(X)$ is a Jacobian matrix of the artificial intelligence model with respect to variable X;
   • y is an output of the artificial intelligence model corresponding to variable X;
   • X is a variable including at least an input x of the current subset of the training dataset (10) and, preferably, at least part of the parameters of the artificial intelligence model;
   • $\vec{X}$ is a vectorized version of variable X; and

   - determining the condition number, for the current subset, based on the condition number computed for each variable X associated with the current subset.

6. The method according to any one of claims 1 to 5, wherein the training loop (30) comprises an optimization step (32) for adjusting parameters of the artificial intelligence model (12), based on the current subset of the training dataset (10), to minimize a loss function that is an increasing function of the condition number of the artificial intelligence model (12).

7. The method according to claim 6, wherein the loss function is equal to a sum of:

- a first term that is an increasing function of a difference between, on the one hand, an output of the artificial intelligence model (12) to a corresponding received input, and, on the other hand, an expected output associated with said received input;
- a second term that is an increasing function of the condition number.

8. Computer program comprising instructions, which when executed by a computer, cause the computer to carry out the steps of the method according to any one of claims 1 to 7.

**Figure 1**

**Figure 2**

**Figure 3**

**Figure 4**

Europäisches Patentamt

European Patent Office

Office européen des brevets

## EUROPEAN SEARCH REPORT

**Application Number**

EP 24 30 5104

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 734 565 B2 (ADOBE INC [US]) 22 August 2023 (2023-08-22) * column 2 - column 12; figures 1A-4 * | 1-8 | INV. G06N3/09 ADD. G06N3/04 |
| X | Yousefzadeh Roozbeh ET AL: "Refining the Structure of Neural Networks Using Matrix Conditioning", arXiv.org, 6 August 2019 (2019-08-06), XP093178116, DOI: 10.48550/arxiv.1908.02400 Retrieved from the Internet: URL:https://arxiv.org/pdf/1908.02400 [retrieved on 2024-06-24] * page 1 - page 2 * * page 4 - page 9 * * page 15 * | 1-8 | |
| X | WEI XIAN ET AL: "Learning Extremely Lightweight and Robust Model with Differentiable Constraints on Sparsity and Condition Number", 28 October 2022 (2022-10-28), SPRINGER INTERNATIONAL PUBLISHING, PAGE(S) 690 - 707, XP047638177, * page 690 - page 699 * | 1-8 | |
| A | MINGCHEN LI ET AL: "Gradient Descent with Early Stopping is Provably Robust to Label Noise for Overparameterized Neural Networks", ARXIV.ORG, CORNELL UNIVERSITY LIBRARY, 201 OLIN LIBRARY CORNELL UNIVERSITY ITHACA, NY 14853, 27 March 2019 (2019-03-27), XP081162918, * the whole document * | 1-8 | |

**TECHNICAL FIELDS SEARCHED (IPC)**

G06N

The present search report has been drawn up for all claims

| Place of search | Date of completion of the search | Examiner |
|---|---|---|
| The Hague | 25 June 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 30 5104

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | Publication date | Patent family member(s) | Publication date |
|---|---|---|---|
| US 11734565 B2 | 22-08-2023 | US 11468314 B1<br>US 2022292356 A1 | 11-10-2022<br>15-09-2022 |

EPO FORM P0459

For more details about this annex : see Official Journal of the European Patent Office, No. 12/82